# EUROPEAN PATENT APPLICATION

(11) **EP 4 564 570 A1**
(43) Date of publication of application: **04.06.2025**
(21) Application number: 24788162.6
(22) Date of filing: 11.04.2024
(51) Int. Cl.: H01M 50/40, H01M 50/403, H01M 50/449, H01M 50/414

(54) **SEPARATOR AND PREPARATION METHOD THEREFOR, AND BATTERY**

(30) Priority: 11.04.2023 CN 202310380876
(71) Applicant: SVOLT Energy Technology Co., Ltd., Changzhou, Jiangsu 213200 (CN)
(72) Inventor: ZHANG, Zhongdong, Changzhou, Jiangsu 213200 (CN); YANG, Yingli, Changzhou, Jiangsu 213200 (CN); JIAO, Lingkuan, Changzhou, Jiangsu 213200 (CN); CHEN, Hui, Changzhou, Jiangsu 213200 (CN); LIU, Jing, Changzhou, Jiangsu 213200 (CN); YANG, Hongxin, Changzhou, Jiangsu 213200 (CN)
(74) Representative: Groth & Co. KB
(86) International application number: PCT/CN2024/087289
(87) International publication number: WO 2024/213060

(57) **Abstract**

A separator and a preparation method therefor, and a battery. The separator comprises a base film and a bonding layer provided on at least one surface of the base film, wherein the bonding layer comprises an acrylate copolymer, a dispersing agent, and a wetting agent. According to the separator, a high-cohesiveness acrylate copolymer formed by crosslinking an acrylate monomer is coated on the surface of the base film, and the prepared separator has the characteristics of strong cohesiveness and a small coating amount of the bonding layer, effectively reduces the risk of blocking holes of the separator, and can improve the cycle life of a battery.

## Description

The present application claims priority to Chinese Patent Application No. 202310380876.2, entitled "Separator and Preparation Method therefor, and Battery", filed on April 11, 2023 to China National Intellectual Property Administration and incorporated herein by reference in its entirety.

### TECHNICAL FIELD

The embodiments of the present application involve but are not limited to a separator and its preparation method, as well as a battery.

### BACKGROUND

Lithium-ion battery separator is a porous functional material. In batteries, the main function of the separator is to isolate the positive and negative electrode plates, avoiding their contact and causing short circuits in the battery, while allowing lithium ions to pass through the separator. The performance of the separator directly affects the cycle life, dynamic characteristics and the like of the battery. Commercially available lithium-ion battery separators generally modify the surface of the separator by coating inorganic ceramic particles and polyvinylidene fluoride (PVDF) on the base film. Ceramic coatings can improve the high temperature resistance of the separator, while PVDF coatings can improve the adhesive force between the separator and the electrode plates, thereby enhancing the hardness of the battery.

Coating PVDF onto the base film can improve the adhesive force of the interface between the battery separator and the electrode plates, and enhance the cycling performance of the battery. However, the adhesion effect of the coating material PVDF used is limited, so the coating amount is relatively high, resulting in an increase in the cost of the separator. At the same time, the high coating amount increases the risk of pore blockage in the separator, which hinders the passage of lithium ions and affects the performance of the battery.

### SUMMARY OF THE INVENTION

### TECHNICAL PROBLEM

The present application provides a separator and its preparation method, as well as a battery, which improves the adhesive force between the separator and electrode plates.

### TECHNICAL SOLUTION

In order to solve the above technical problems, the embodiments of the present application disclose the following technical solutions.

According to the first aspect of the present application, a separator is provided, and the separator comprises a base film and an adhesive layer provided on at least one surface of the base film, wherein the adhesive layer comprises an acrylate-based copolymer, a dispersing agent, and a wetting agent.

In some embodiments, the mass ratio of the acrylate-based copolymer, the dispersing agent, and the wetting agent is (80-98): (1-10): (1-10).

In some embodiments, the adhesive layer comprises deionized water, and the mass percentage of deionized water in the adhesive layer is in a range from 70% to 90%.

In some embodiments, the acrylate-based copolymer comprises a polymer obtained by copolymerizing one or more of acrylic acid, methyl acrylic acid, acrylate, and methyl acrylate.

In some embodiments, the acrylate-based copolymer comprises primary particles and secondary particles, the particle diameter of the primary particles is in a range from 200nm to 500nm, and the particle diameter of the secondary particles is in a range from 4.5 µm to 8.5 µm.

In some embodiments, the dispersing agent comprises at least one of sodium acrylate and ammonium acrylate.

In some embodiments, the wetting agent comprises one or more of polyethylene glycol, glycerol, and propylene glycol.

In some embodiments, the dispersing agent is ammonium acrylate and the wetting agent is polyethylene glycol.

In some embodiments, the thickness of the adhesive layer is in a range from 1 µm to 4 µm.

In some embodiments, the adhesive layer has a solid content of slurry ranging from 10% to 30%.

In a second aspect, there is provided a method for preparing the separator as described in the first aspect, it comprises:
forming a base film and an adhesive layer separately; and
transferring the adhesive layer onto at least one surface of the base film,
wherein a process for preparing the adhesive layer includes adding the acrylate-based copolymer, the dispersing agent, and the wetting agent to deionized water, and dispersing to obtain the adhesive layer.

In a third aspect, there is provided a battery, and the battery comprises a positive electrode, a negative electrode, an electrolyte, and a separator, wherein the separator is the separator as described in the first aspect.

### BENEFICIAL EFFECTS

One of the above technical solutions has the following advantages or beneficial effects.

The present application involves coating an adhesive layer on the surface of a base film, and the adhesive layer uses an acrylate-based copolymer water-based coating material with strong adhesive force, low specific gravity, and low swelling. Acrylate-based copolymers contain a large number of polar groups such as carbonyl and ester groups. During the hot pressing process of batteries prepared with separators including this adhesive layer, the presence of polar groups in the material creates stronger intermolecular interactions, resulting in stronger adhesive force between the separator and the electrode plates. At the same time, the coating amount of the adhesive layer of the separator in the present application is reduced, resulting in a corresponding decrease in the risk of pore blockage and cost reduction, and effectively improving the cycle life of the battery.

### DETAILED DESCRIPTION

The following will further illustrate the technical solution of the present application through specific embodiments. Those skilled in the art should understand that the following examples are only intended to assist in understanding the present application and should not be considered as specific limitations on the present application.

An embodiments of the present application provide a separator and its preparation method, as well as a battery. The following will provide detailed explanations separately. It should be noted that the order in which the following examples are described is not intended to limit the preferred order of the examples.

In this description, the numerical range displayed using "-" indicates the range that includes the values recorded before and after "-" as the minimum and maximum values, respectively.

An embodiments of the present application provide a separator comprising a base film and an adhesive layer disposed on at least one surface of the base film, wherein the adhesive layer comprises an acrylate-based copolymer, a dispersing agent, and a wetting agent. The material used in the adhesive layer of the separator in the present application (acrylate-based copolymer formed by crosslinking acrylate-based monomers) has strong adhesive force and contains a large number of polar groups that can increase intermolecular interactions. Its cohesiveness is stronger than that of water-based PVDF, and a smaller amount of acrylate-based copolymer can achieve better adhesive effect. Therefore, the adhesive layer material of the present application has a lower specific gravity and less coating amount, and the adhesive force can reach or exceed the level of PVDF, while also reducing the cost of the separator.

In some embodiments of the present application, the mass ratio of the acrylate-based copolymer, the dispersing agent, and the wetting agent is (80-98): (1-10): (1-10), for example, it can be 82:9:9, 84:9:7, 89:5:6, 92:4:4, 96:2:2, or within the range consisting of any two of these values. In some embodiments of the present application, the mass ratio of the acrylate-based copolymer, the dispersing agent, and the wetting agent may be (86-96): (2-7): (2-7). In some embodiments of the present application, the mass ratio of the acrylate-based copolymer, the dispersing agent, and the wetting agent may be (90-94): (3-5): (3-5). When the mass ratio of the acrylate-based copolymer, the dispersing agent, and the wetting agent is within the above ranges, the formed separator has relatively good cohesiveness, which reduces the expansion rate of the battery cell after cycling, and is conducive to reducing internal resistance and improving the cycle life of the battery.

In some embodiments of the present application, the adhesive layer comprises deionized water, and the mass percentage of deionized water in the adhesive layer is in a range from 70% to 90%, for example, it can be 72%, 73%, 76%, 77%, 78%, 81%, 86%, 88%, or within a range consisting of any two of these values. In some embodiments of the present application, the mass percentage of deionized water in the adhesive layer may be in a range from 75% to 85%. In some embodiments of the present application, the mass percentage of deionized water in the adhesive layer may be in a range from 80% to 83%. By adjusting the content of deionized water in the adhesive layer, the solid content of slurry for the adhesive layer can be controlled.

In some embodiments of the present application, the acrylate-based copolymers include polymers obtained by copolymerizing one or more of acrylic acid, methyl acrylic acid, acrylate, and methyl acrylate.

In some embodiments of the present application, the acrylate-based copolymer comprises primary particles and secondary particles formed by aggregation of the primary particles. The particle diameter of the primary particles ranges from 200nm to 500nm, for example, it can be 220nm, 270nm, 350nm, 430nm, 480nm, or in the range consisting of any two of these values. In some embodiments of the present application, the particle diameter of the primary particles ranges from 250nm to 450nm. In some embodiments of the present application, the particle diameter of the primary particles ranges from 300nm to 400nm.

In some embodiments of the present application, the particle diameter of the secondary particles ranges from 4.5 µm to 8.5 µm, for example, it can be 5.5 µm, 6.5 µm, 7.5 µm, or within the range consisting of any two of these values. In some embodiments of the present application, the particle diameter of the secondary particles ranges from 5 µm to 8 µm. In some embodiments of the present application, the particle diameter of the secondary particles ranges from 6 µm to 7 µm. When the particle diameters of primary particles and secondary particles are controlled within the above ranges, the permeability increase value of the produced separator is low, which can effectively reduce the internal resistance and improve the cycle life of the battery.

In some embodiments of the present application, the dispersing agent is an acrylic salt, and the dispersing agent includes at least one of sodium acrylate and ammonium acrylate.

In some embodiments of the present application, the wetting agent is a fatty alcohol, and the wetting agent includes one or more of polyethylene glycol, glycerol, and propylene glycol.

In some embodiments of the present application, the dispersing agent is ammonium acrylate and the wetting agent is polyethylene glycol.

In some embodiments of the present application, the thickness of the adhesive layer ranges from 1 µm to 4 µm, for example, it can be 1.5 µm, 2.5 µm, 3.5 µm, or within the range consisting of any two of these values. In some embodiments of the present application, the thickness of the adhesive layer may be between 2 µm and 3 µm. The thickness of the adhesive layer needs to be controlled within the above ranges. If the thickness of the adhesive layer is too thick, it will increase the internal resistance of the battery. If the thickness of the adhesive layer is too thin, the adhesion effect is limited.

In some embodiments of the present application, the adhesive layer has a solid content of slurry ranging from 10% to 30%, for example, it can be 13%, 17%, 22%, 28%, or in the range consisting of any two of these values. In some embodiments of the present application, the solid content of slurry for the adhesive layer may be in a range from 15% to 20%. By adjusting the content of deionized water in slurry for the adhesive layer, the solid content of slurry for the adhesive layer can be controlled within the above ranges.

In some embodiments of the present application, the material of the base film includes at least one of polyethylene and polypropylene. The thickness of the base film ranges from 4 µm to 19 µm, for example, it can be 6 µm, 7 µm, 8 µm, 12 µm, 13 µm, 16 µm, or within the range consisting of any two of these values. In some embodiments of the present application, the thickness of the base film may be between 5 µm and 18 µm. In some embodiments of the present application, the thickness of the base film may be in a range from 10 µm to 15 µm. When the thickness of the base film is within the above ranges, the base film has relatively good mechanical properties.

Correspondingly, the embodiment of the present application provides a method for preparing a separator, which comprises: forming a base film and an adhesive layer respectively; and transferring the adhesive layer onto at least one surface of the base film; wherein a process for preparing the adhesive layer includes adding the acrylate-based copolymer, the dispersing agent, and the wetting agent into deionized water to obtain the adhesive layer after dispersion.

In specific implementation, the process for preparing the adhesive layer includes: adding the ground acrylate-based copolymer, the dispersing agent, and the wetting agent into deionized water in sequence, dispersing at high speed for 3 hours, and obtaining the adhesive layer.

In specific implementation, the adhesive layer is transferred onto at least one surface of the base film through gravure transfer coating. The prepared slurry for the adhesive layer was coated on one or both sides of the base film, and dried at a temperature of 60 °C to 75 °C for 2min to 5min. After sufficient drying, the separator for lithium-ion batteries with high cohesiveness and low coating amount as described in the present application can be prepared.

An embodiment of the present application also provides a battery comprising a positive electrode, a negative electrode, an electrolyte, and a separator, wherein the separator is the separator as describe above or the separator prepared by the above-mentioned preparation method.

Specifically, the negative electrode material used in the negative electrode can be one or more of artificial graphite, natural graphite, intermediate phase carbon microspheres, amorphous carbon, lithium titanate, and silicon carbon alloy.

Specifically, the type of the cathode active material used in the positive electrode is not particularly limited, as long as it can electrochemically absorb and release metal ions (such as lithium ions). In some embodiments of the present application, the cathode active material comprises one or more of lithium iron phosphate (LFP), lithium manganese oxide (LMO), and ternary materials.

An embodiment of the present application also provides an electrical device comprising the above-mentioned battery. The electrical devices used in the present application include, but are not limited to, backup power sources, motors, electric vehicles, electric motorcycles, assisted bicycles, bicycles, power tools, large household storage batteries, etc.

The following will illustrate in connection with specific examples.

### Example 1

This example provides a method for preparing a separator and a battery, specifically as follows.

The method for preparing the separator in this example includes the following steps:
1) the adhesive polymer acrylate-based copolymer, the dispersing agent, and the wetting agents were added into deionized water in sequence, and the materials were dispersed at high speed for 3 hours to obtain a slurry for the adhesive layer; wherein the mass ratio of the acrylate-based copolymer, the dispersing agent, and the wetting agent was 93:5:2, and the amount of deionized water added was controlled to achieve a solid content of 20% in the slurry; and the primary particle diameter of the acrylate-based copolymer is 300nm;
2) the prepared slurry for the adhesive layer was coated on both sides of a PE base film with a thickness of 9 µm using gravure transfer coating, the weight of the adhesive layer was controlled to be 0.3 g/m² per side, and the thickness of the adhesive layer is 1 µm; and
3) the separator of this example can be prepared by baking for 3 minutes at 70 °C.

The method for preparing the battery in this example includes the following steps:
1) various raw materials in the positive electrode slurry and the negative electrode slurry were added into the solvent in proportion, and the materials were stirred thoroughly to obtain a mixed slurry, wherein, in the positive electrode slurry, the mass ratio of ternary material with medium nickel content LY346, conductive agent SP, and adhesive PVDF is 96.5:1.8:1.7, while in the negative electrode slurry, the mass ratio of artificial graphite Q16, conductive agent SP, and adhesive styrene-butadiene latex SBR is 96.2:1.5:2.3;
2) the mixed slurry was coated evenly onto copper foil/aluminum foil, and the desired positive electrode plate and negative electrode plate were obtained through drying, rolling, and cutting; and
3) the prepared negative electrode plate, positive electrode plate, separator, and TM1G008 electrolyte were assembled and then electrochemical performance testing was conducted.

### Example 2

The preparation method of the separator in Example 2 is the same as that in Example 1, except that the particle diameter of the primary particles of the acrylate-based copolymer is 200nm.

### Example 3

The preparation method of the separator in Example 3 is the same as that in Example 1, except that the particle diameter of the primary particles of the acrylate-based copolymer is 500nm.

### Example 4

The preparation method of the separator in Example 4 is the same as that in Example 1, except that the mass ratio of the acrylate-based copolymer, the dispersing agent, and the wetting agent is 80:10:10.

### Example 5

The preparation method of the separator in Example 5 is the same as that in Example 1, except that the mass ratio of the acrylate-based copolymer, the dispersing agent, and the wetting agent is 98:1:1.

### Example 6

The preparation method of the separator in Example 6 is the same as that in Example 1, except that the thickness of the adhesive layer is 3 µm.

### Example 7

The preparation method of the separator in Example 7 is the same as that in Example 1, except that the thickness of the adhesive layer is 4 µm.

### Comparative Example 1

This comparative example provides the preparation methods of a separator and a battery, specifically as follows.

The method for preparing the separator in this comparative example includes the following steps:
1) adhesive polymer PVDF, a dispersing agent, and a wetting agent was added into deionized water in sequence, the materials were dispersed at high speed for 3 hours to obtain a slurry for the adhesive layer; wherein the mass ratio of PVDF, the dispersing agent, and the wetting agent is 93:5:2, the amount of deionized water added was controlled to achieve a solid content of 20% in the slurry, and the particle diameter of primary particles of PVDF is 200nm;
2) the prepared slurry for the adhesive layer was coated onto the two sides of the PE base film with a thickness of 9 µm by using gravure transfer coating, the weight of the adhesive layer is controlled to be 0.5 g/m² per side, and the thickness of the adhesive layer is 1 µm; and
3) the separator of this comparative example can be prepared by baking for 3 minutes at 70 °C.

The process for preparing the battery in this comparative example includes the following steps:
1) various raw materials in the positive electrode slurry and the negative electrode slurry were added into the solvent in proportion and stirred thoroughly to obtain a mixed slurry; wherein, in the positive electrode slurry, the mass ratio of ternary material with medium nickel content LY346, conductive agent SP, and adhesive PVDF is 96.5:1.8:1.7, while in the negative electrode slurry, the mass ratio of artificial graphite Q16, conductive agent SP, and adhesive styrene-butadiene latex SBR is 96.2:1.5:2.3;
2) the mixed slurry was evenly coated onto copper foil/aluminum foil, and the desired positive and negative electrode plates were obtained through drying, rolling, and cutting; and
3) the prepared negative electrode plate, positive electrode plate, separator, and TM1G008 electrolyte were assembled, and then electrochemical performance testing was conducted.

### Comparative Example 2

The preparation method of the separator for Comparative Example 2 is the same as that of Example 1, except that the particle diameter of the primary particles of the acrylate-based copolymer is 700 nm.

### Comparative Example 3

The preparation method of the separator for Comparative Example 3 is the same as that of Example 1, except that the mass ratio of the acrylate-based copolymer, the dispersing agent, and the wetting agent is 70:15:15.

### Comparative Example 4

The preparation method of the separator for Comparative Example 4 is the same as that of Example 1, except that the thickness of the adhesive layer is 5 µm.

The parameters of the separators for the examples and the comparative examples are shown in Table 1.

**Table 1**

| Group | Adhesive polymer | Particle diameter of primary particles of adhesive polymer (nm) | Mass ratio of adhesive polymer, dispersing agent, and wetting agent | Thickness of adhesive layer (µm) |
|---|---|---|---|---|
| Example 1 | Acrylate-based copolymer | 300 | 93:5:2 | 1 |
| Example 2 | Acrylate-based copolymer | 200 | 93:5:2 | 1 |
| Example 3 | Acrylate-based copolymer | 500 | 93:5:2 | 1 |
| Example 4 | Acrylate-based copolymer | 300 | 80:10:10 | 1 |
| Example 5 | Acrylate-based copolymer | 300 | 98:1:1 | 1 |
| Example 6 | Acrylate-based copolymer | 300 | 93:5:2 | 3 |
| Example 7 | Acrylate-based copolymer | 300 | 93:5:2 | 4 |
| Comparative Example 1 | PVDF | 200 | 93:5:2 | 1 |
| Comparative Example 2 | Acrylate-based copolymer | 700 | 93:5:2 | 1 |
| Comparative example 3 | Acrylate-based copolymer | 300 | 70:15:15 | 1 |
| Comparative Example 4: | Acrylate-based copolymer | 300 | 93:5:2 | 5 |

The performance testing on the separators obtained from the examples and comparative examples was conducted using the following testing methods.
(1) Area density test: testing was conducted according to GB/T36363-2018.
(2) Permeability test: the time required for 100cc of gas to pass through the separator was tested every 150mm along the longitudinal direction for at least three times.
(3) Adhesive force test: the surface of the adhesive layer of the separator was contacted with the positive electrode plate, and the adhesive force between the separator and the electrode plate was tested after hot pressing under certain conditions.

The electrochemical performance and safety testing of the lithium-ion batteries prepared by the separators of the examples and the comparative examples are tested by the following test methods.
(1) DCR test: the DCR of the prepared battery at 50% SOC at 25 °C was tested and the internal resistances were compared.
(2) Cycling test: at 25 °C and 45 °C, the batteries were charged at a constant current of 1C to 4.35V, charged at a constant voltage to 0.05C, discharged at a constant current of 1C to 2.8V, with 1000 cycles, and the capacity retention rates were compared.

The test results are shown in Table 2:

**Table 2**

| Group | Area density (g/m²) | Permeability (s/100cc) | Adhesive force (N/m) | Capacity retention rate at 25 °C (%) | Capacity retention rate at 45 °C (%) | DCR (mΩ) |
|---|---|---|---|---|---|---|
| Example 1 | 5.7 | 192.1 | 11 | 97 | 93.8 | 13.9 |
| Example 2 | 5.8 | 205 | 10 | 96.5 | 93.2 | 14.2 |
| Example 3 | 5.9 | 198 | 9.8 | 96.2 | 93.1 | 14.8 |
| Example 4 | 5.9 | 222 | 9.6 | 95.5 | 92.0 | 17.0 |
| Example 5 | 5.8 | 190 | 10.2 | 96.3 | 92.7 | 14.9 |
| Example 6 | 6.3 | 208 | 11.5 | 95.6 | 90.4 | 16.8 |
| Example 7 | 6.6 | 216 | 11.9 | 95.3 | 89.9 | 17.1 |
| Comparative Example 1 | 6.3 | 223 | 6.9 | 95.3 | 89.1 | 17.5 |
| Comparative Example 2 | 6.0 | 213 | 9.5 | 95.5 | 90.4 | 17.0 |
| Comparative example 3 | 5.9 | 220 | 7.8 | 95.8 | 90 | 17.3 |
| Comparative Example 4: | 6.9 | 228 | 12.1 | 95 | 89 | 17.5 |

From the results in the table, it can be seen that comparing Example 1 with Comparative Example 1, the area density of the separator in Example 1 decreased by 10% compared to that of Comparative Example 1, which is due to the reduced coating amount applied. At the same time, the permeability of the separator in Example 1 reduced. Additionally, the adhesive force between the separator and the electrode plates increased by more than 50%. High adhesive force and low risk of pore blockage can reduce internal resistance and improve cycling performance of the battery. In addition, the capacity retention rate of the lithium-ion battery produced in Example 1 after 1000 cycles at different temperatures and current densities of 1C was higher than those of the comparative examples. The DCR of the prepared batteries was tested at 25 °C and 50% SOC. The DCR of the battery using the separator of Comparative Example 1 was 17.5mΩ, and the DCR of the battery using of the separator of Example 1 was 13.9 mΩ. The internal resistance decreased by 2%, which is beneficial for improving the cycle life.

Comparing Examples 2 and 3 with Comparative Example 2, as the diameter of the primary particles of the acrylate-based copolymer increases beyond the range of 500 nm, the permeability of Comparative Example 2 increases while the internal resistance also increases, with the coating amounts thereof being close, and the capacity retention rate of the prepared battery after cycling is lower than those of Examples 2 and 3, indicating that controlling the particle diameter range of the acrylate-based copolymer is beneficial for reducing internal resistance and improving cycle life. Comparing Examples 4 and 5 with Comparative Example 3, in the mass ratio of the adhesive polymer, the dispersing agent, and the wetting agent in Comparative Example 3, the ratio of the adhesive polymer is smaller, which cannot effectively achieve the adhesion effect, then the expansion and contraction effect during the charging and discharging process is poor, resulting in a high expansion rate of the battery cell after cycling, which leads to a large internal resistance and affects the cycle life of the battery.

Comparing Examples 6 and 7 with Comparative Example 4, the thickness of the adhesive layer in Comparative Example 4 was larger, which leads to a significant increase in the permeability of the separator, while an excessively thick coating increases the internal resistance of the battery, resulting in poorer cycling performance. The DCR of the battery using the separator of Comparative Example 5 is 17.5 mΩ, which is higher than those of Examples 6 and 7. The increased internal resistance is not conducive to improving the cycle life.

The present application involves coating a layer of acrylate-based copolymer adhesive layer with high adhesive force and low coating amount on the surface of the base film of the separator, thus it has relatively good adhesion between the separator and the plates, and the density of the adhesive layer is light, the coating amount is low, the cost of the separator is reduced, and the pore blockage effect is reduced. The lithium-ion battery made using the separator in the present application can not only improve the adhesion between the battery's electrode plates and separator, thereby increasing the battery's cycle life, but also help achieve lightweight design of the battery.

The introduction provided in the above steps is only intended to help understand the method, structure, and core idea of the present application. For ordinary technicians in this technical field, without departing from the principles of the present application, they can also make several improvements and modifications to the present application, which are also within the scope of protection of the claims of the present application.

## Claims

1. A separator, comprising a base film and an adhesive layer provided on at least one surface of the base film, wherein the adhesive layer comprises an acrylate-based copolymer, a dispersing agent, and a wetting agent.

2. The separator according to claim 1, wherein the mass ratio of the acrylate-based copolymer, the dispersing agent, and the wetting agent is (80-98): (1-10): (1-10).

3. The separator according to claim 1, wherein the adhesive layer comprises deionized water, and the mass percentage of deionized water in the adhesive layer is in a range from 70% to 90%.

4. The separator according to claim 1, wherein the acrylate-based copolymer comprises a polymer obtained by copolymerizing one or more of acrylic acid, methyl acrylic acid, acrylate, and methyl acrylate.

5. The separator according to claim 1, wherein the acrylate-based copolymer comprises primary particles and secondary particles, the particle diameter of the primary particles is in a range from 200nm to 500nm, and the particle diameter of the secondary particles is in a range from 4.5 µm to 8.5 µm.

6. The separator according to claim 1, wherein the dispersing agent comprises at least one of sodium acrylate and ammonium acrylate; and/or, the wetting agent comprises one or more of polyethylene glycol, glycerol, and propylene glycol.

7. The separator according to claim 1, wherein the dispersing agent is ammonium acrylate and the wetting agent is polyethylene glycol.

8. The separator according to claim 1, wherein the thickness of the adhesive layer is in a range from 1 µm to 4 µm; and/or, the adhesive layer has a solid content of slurry ranging from 10% to 30%.

9. A method for preparing the separator as claimed in any one of claims 1 to 8, comprising:
forming a base film and an adhesive layer separately; and
transferring the adhesive layer onto at least one surface of the base film;
wherein a process for preparing the adhesive layer includes adding the acrylate-based copolymer, the dispersing agent, and the wetting agent to deionized water, and dispersing to obtain the adhesive layer.

10. A battery, comprising a positive electrode, a negative electrode, an electrolyte, and a separator, wherein the separator is the separator according to any one of claims 1 to 8 or a separator prepared by the method according to claim 9.
